# EUROPEAN PATENT SPECIFICATION

(11) **EP 1 819 561 B1**
(45) Date of publication and mention of the grant of the patent: **18.04.2012**
(21) Application number: 05852457.0
(22) Date of filing: 29.11.2005
(51) Int. Cl.: B60T 7/10, B60T 8/32, B60T 13/66, B60T 13/68

(54) **DISTRIBUTED ANTILOCK BRAKE SYSTEM**
VERTEILTES ANTIBLOCKIERSYSTEM
SYSTEME DE FREINAGE A ANTI-BLOCAGE REPARTI

(30) Priority: 06.12.2004 US 5753
(43) Date of publication of application: 22.08.2007
(73) Proprietor: Benedix Commercial Vehicle Systems LLC, Elyria, OH 44035 (US)
(72) Inventor: FRASHURE, Timothy, J., Columbia Station, OH 44028 (US)
(74) Representative: Finnie, Peter John
(86) International application number: PCT/US2005/043205
(87) International publication number: WO 2006/062774

(56) References cited:
- EP-A- 1 571 061
- US-A- 5 707 117
- US-A- 5 752 748
- US-A1- 2002 050 739
- US-B1- 6 498 976

## Description

### TECHNICAL FIELD OF THE INVENTION

This invention relates generally to antilock brake systems for use in vehicles, and more specifically to distributed or modular system architecture for use with antilock air brake systems installed on commercial vehicles such as trucks.

### BACKGROUND OF THE INVENTION

Many modem vehicles include antilock brake systems (ABS) as standard equipment. In general terms, antilock braking systems are electronic systems that monitor and control wheel slippage during vehicle braking. Antilock brakes can improve vehicle control during braking events and can reduce stopping distances on slippery surfaces by limiting wheel slippage and minimizing wheel lockup. Rolling wheels have much greater traction than locked wheels. Thus, reducing wheel slip improves vehicle stability and control during braking, because stability typically increases as wheel slip decreases. A typical ABS consists of several key components, including an electronic control unit (ECU), multiple modulator valves, and multiple wheel speed sensors.

In terms of reliability, the wiring harness used to connect the various ABS components may prove problematic, due in part to its placement on the vehicle's chassis. The vehicle chassis is often a harsh environment for electrical conductors and connections. Furthermore, the overall reliability of the system decreases proportionally to the number of wires, wire length, and number of electrical connections present on the vehicle. Current ABS systems include a multitude of wires and connections placed throughout the vehicle and any failure of these connections may result in system failure and loss of ABS. Correctly mounting and connecting these various components also poses a challenge for the vehicle integrator. Since the ABS components are typically installed and connected when the vehicle is being assembled, there are multiple time points at which incorrect or incomplete electrical connections may occur. Thus, there is a need for an ABS architecture that minimizes the exposure of the wiring harness to potentially destructive environmental conditions and that increases the likelihood that the system will be properly installed at the time of vehicle assembly.
US 2002/050739 discloses a method and device for controlling wheel brakes. A control of the valves derived from a second power circuit independent of the first one is disclosed in the event of a fault, via which the braking pressure in the at least one wheel brake can be set even in the event of a fault.

### SUMMARY OF THE INVENTION

Various aspects of the present invention are set out in the appended claims.

Deficiencies of the prior art are overcome by the present invention, the exemplary embodiment of which provides a distributed antilock brake system for use in a vehicle such as a van, truck, or bus that utilizes air brakes. The configuration of the system components in the present invention reduces the sizing and length of the wiring used and significantly reduces the number of connections made while installing the system on a vehicle.

The exemplary architecture of the system of the present invention includes a first control module and a second control module. The first control module is in communication with at least one brake and at least one sensor. The sensor is in communication with at least one wheel, and the first control module controls the brake in response to information received from the sensor. The second control module is in communication with at least one brake and at least one sensor. The sensor is in communication with at least one wheel, and the second control module controls the brake in response to information received from the sensor. The second control module is in communication with the first control module.

In operation, the first control module is in communication with the vehicle's front wheels and brakes and the second control module is in communication with the vehicle's rear wheels and brakes. The modules typically communicate with one another and with at least one user interface over a network communications link such as a J1939 serial data bus. Additional features and aspects of the present invention will become apparent to those of ordinary skill in the art upon reading and under-standing the following detailed description of the preferred embodiments.

### BRIEF DESCRIPTION OF THE DRAWINGS

The accompanying drawings, which are incorporated into and form a part of the specification, schematically illustrate one or more exemplary embodiments of the invention and, together with the general description given above and detailed description of the preferred embodiments given below, serve to explain the principles of the invention.

FIG. 1 is a schematic representation of an exemplary prior art ABS architecture.

FIG. 2 is a schematic representation of an exemplary embodiment of the ABS architecture of the present invention.

### DETAILED DESCRIPTION OF THE INVENTION

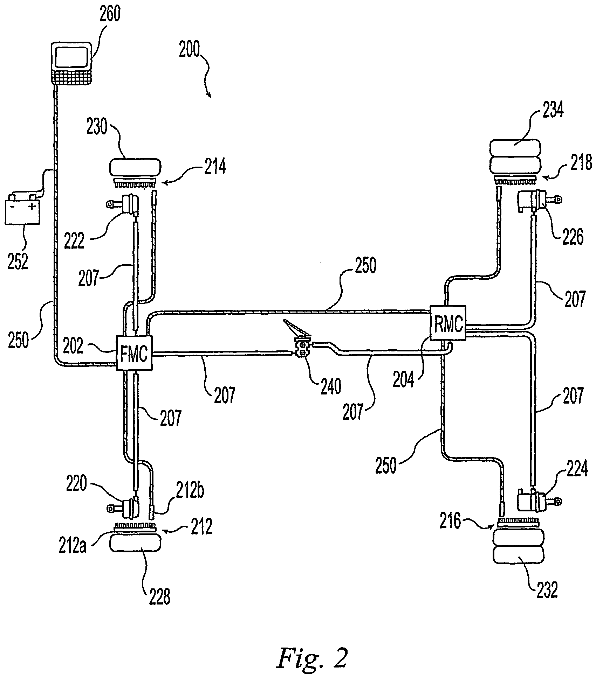

The exemplary embodiment of the present invention shown in FIG. 2 provides a decentralized or "distributed" system architecture for an antilock brake system (ABS). In accordance with one aspect of the present invention, the single electronic control unit (ECU) typically used with antilock brake systems is replaced with two separate electronic control units, one for controlling the front brakes and one for controlling the rear brakes. These control modules communicate with one another and with a user interface to control the vehicle's front and rear brakes in response to information received from a plurality of sensors that are in communication with the vehicle's wheels. In accordance with another aspect of the invention, an integrated ECU and valve assembly is provided as part of both of the control modules. The overall number of wires and connections is reduced by this invention and the reliability of the system is increased by combining ECU functionality and pneumatic valve functionality into a single integrated device.

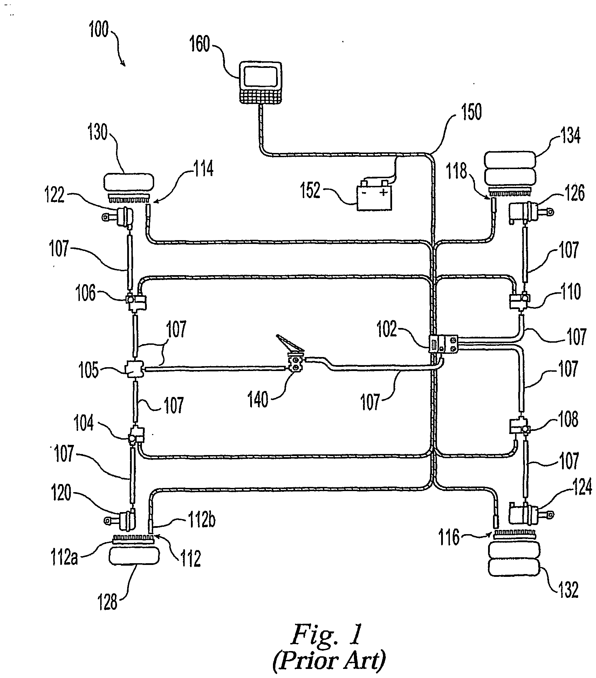

For the purpose of characterizing the antilock brake system (ABS) architecture of the present invention, FIG. 1 provides a generalized schematic of an exemplary prior art ABS for use with a vehicle that employs air brakes. The system of FIG. 1 includes typical, "non-distributed" system architecture similar to the ABS found on many commercial vehicles. As shown in FIG. 1, a typical ABS consists of a number of basic components: electronic control unit (ECU) **102**; front modulator valves **104** and **106**; a quick release valve **105**; a plurality of pneumatic lines **107**; rear modulator valves **108** and **110**; front wheel speed sensors **112** and **114**; rear wheel sensors **116** and **118**; wiring harness **150**, and user interface **160**.

The ECU **102** typically includes an on-board microprocessor that controls the overall function of antilock brake system **100** in accordance with preprogrammed commands and algorithms. Printed circuit boards and other similar devices may be used for or as part of the ECU. Although other configurations are possible, each modulator valve typically contains two solenoids and regulates the air pressure to front brake chambers **120**, **122** and rear brake chambers **124**, **126** during ABS activity. When not receiving commands from the ECU, a modulator valve generally allows air to flow freely and has little or no effect on the brake pressure. In response to signal input, the ECU commands the modulator valve to either change the air pressure to the brake chamber, or hold the existing pressure. However, a modulator valve does not typically apply the brakes automatically, or increase the brake application pressure above the level applied by a driver using service brake valve **140** to apply the brakes. Although other configurations are possible, each wheel speed sensor typically includes an exciter (see **112a**), a pickup see (**112b**), and associated wiring and mounting equipment. The exciter, also known as a sensor ring, tooth wheel, or tone ring is a ring with notched teeth. The pickup is commonly referred to as "the sensor" and contains a wire coil/magnet assembly, which generates pulses of electricity as the teeth of the exciter pass in front of it. The ECU uses the electrical pulses to determine the wheels speeds and rates of acceleration and deceleration. ABS configuration is typically defined by the arrangement and number of sensors and modulator valves incorporated into the system. The most common configurations are: four sensors/four modulators (4S/4M), six sensors/four modulators (6S/4M), and six sensors/six modulators (6S/6M). Common configurations for trailers are 2S/1M, 2S/2M, 4S/2M and 4S/3M.

In operation, the wheel speed sensors monitor the speed of front wheels **128**, **130** and rear wheels **132**, **134** and send electrical pulses to ECU **102** at a rate proportional to the wheel speed. When the pulse rates indicate impending wheel lockup, the ECU signals one of more of the modulator valves to reduce and/or hold the brake application pressure to the appropriate wheel or wheels. The ECU then adjusts pressure and attempts to apply maximum braking force without risking wheel lockup. In the exemplary system of FIG. 1, wiring harness **150** connects the ABS components to one another and provides the pathway along which electrical power from power source **152** is supplied, as well as the pathway for communication between the various components of system **100**. Power source **152** is typically a battery of the type used with vehicles.

Most ABS systems have self-diagnostic capability to assure proper operation of the system. Typically, the ECU repeatedly monitors itself and if it detects a malfunction or failure, it will shut down the affected part of the system or even the entire system. On truck-tractors and single-unit or straight trucks, an ABS system may provide diagnostic information to technicians through the malfunction indicator lamp and/or an electronic diagnostic tool, which plugs into an on-board diagnostic connector. The connector is typically located inside the tractor cab just underneath the left end of the instrument panel. It is usually the same connector that's used to troubleshoot electronic engines. As shown in FIG. 1, the diagnostic function and other control functions may be present in a computer or dash control module **160**, which communicates with the ABS using any acceptable communications link installed on the vehicle. This communications link may also be used for communication between the ABS components and certain indicator lamps and switches (not shown in FIG. 1).

FIG. 2 provides a schematic representation of an exemplary embodiment of the "distributed" ABS architecture of the present invention. As shown in FIG. 2, the vehicle's service brakes are still operated by a foot valve **240** and air is still supplied to the brakes by a plurality of pneumatic lines **207**; however the single ABS electronic control unit (see FIG. 1) has been replaced by two separate control modules: front modulator controller **202** and rear modulator controller **204**. Distribution of ABS control to the front and rear of the vehicle in this manner reduced harnessing, connections, and increases ease of assembly. Each of the two control modules is a device that includes ECU functionality as well as modulation valve and pneumatic valve functionality. The front and rear modulator controllers may be identical in construction or each device may be customized for specific applications.

In one embodiment of the present invention (not shown in the Figures), the modulator controllers are integrated "mechantronic" units that include, within a single housing or enclosure, a printed circuit board (PCB) in communication with the wheel sensors and also in communication with a valve assembly. The valve assembly further includes at least one solenoid valve and at least one modulator valve in communication with the solenoid. The modulator valve may include relay or other pneumatic valve functionality. This embodiment includes at least one communication connection, at least one power connection, at least one sensor input, at least one pneumatic brake port, at least one exhaust port, and at least one connection between the PCB and the solenoids. A cover may be provided to seal the enclosure and protect the PCB and other components. In another embodiment of the modulator controllers (not shown in the Figures), each modulator controller is a non-integrated assembly of separate parts, i.e., a PCB, a solenoid sub-assembly, and a modulator valve sub-assembly. Functionally, this embodiment is similar or identical to the mechatronic version and includes most or all of the same connections, inputs, and ports.

In the exemplary embodiment of system **200** (see FIG. 2) front modulator controller **202** receives wheel speed information from front sensors **212** (i.e., the combined operation of ring **212a** and pickup **212b** and the equivalent devices comprising the other wheel sensors) and **214** and directly controls front axle brake chambers **220** and **222**, which apply braking force to front wheels **228** and **230.** Likewise, rear modulator controller **204** receives wheel speed information from rear sensors **216** and **218** and directly controls rear axle brake chambers **224** and **226**, which apply braking force to rear wheels **232** and **234.**

As shown in FIG. 2, the front and rear modulator controllers are in communication with a dash-mounted control module **260**, which provides the user interface between the vehicle's operator and the ABS system, and provides the operator with certain system-related information. In this embodiment, substantially all of the ABS connections to interface **260** are through front modulator controller **202.** In the exemplary embodiment, communication between dash control module **260** and the other system components, as well as communication between individual ABS components, occurs across an SAE J1939 serial control and communication bus that links the system together as a network. Other SAE protocols may be suitable with the ABS architecture of the present invention. In other embodiments of the present invention, dash control module **260** is not present and certain dash-mounted devices (e.g., ABS/traction control mode switches, ABS malfunction/warning indicator lamps, and traction control lamps) communicate directly with one or both of the modulator controllers.

In operation, the ABS system functions substantially in the same manner as the system of FIG. 1, described above. The primary difference is that the operation of the front sensors and brakes are controlled by front modulator controller **202** and the operation of the rear sensors and brakes is controlled by rear modulator controller **204**. As stated, each modulator controller includes ECU functionality and modulator valve capability for the purpose of regulating air pressure to the vehicle's service brakes in accordance with ABS programming. In the exemplary embodiment of the present invention, front modulator controller **202**, receives a diagnostic "state of health" signal from the rear modulator controller 204 to prevent the operation of the front ABS components independent of the rear ABS components.
In general, the in-vehicle networking aspect of the present invention may be used for transferring data among distributed electronic modules via a serial data bus. Without this serial networking, inter-module communication typically requires dedicated, point-to- point wiring resulting in bulky, expensive, complex, and difficult to install wiring harnesses. Utilizing a serial data bus reduces the number of wires by combining the signals on a single wire through time division multiplexing. Information is sent to individual control modules that control each function, such as the anti-lock braking aspect of this invention.
In the exemplary embodiment shown in FIG. 2, which includes dash control module 260, the typically long, heavy, and complex wiring harness 150 (see FIG. 1) has been reduced to simply the serial data bus and power line 250. Thus, only the J1939 serial data bus and the power line run between the electrically powered ABS components. Additionally, in this embodiment, the modulator controllers are located on the frame close to the sensors and actuators, thereby allowing for minimum connection distance and routing, as well as convenient mounting locations. Thus, in one embodiment of the present invention, the ABS architecture significantly reduces the connections required in the ABS system by the integration of the major ABS components into front and rear modulator controllers and making use of the vehicle data bus for serial communications between the devices. Use of these networked devices reduces the number of wiring and interconnects that are exposed to harsh external conditions on the vehicle's chassis as well as reducing the possibility of incorrect connection during assembly. If desired, the existing connections to the modulator controllers can be specifically keyed for further protection against incorrect wiring.

## Claims

1. An antilock brake system for use on a vehicle, the system comprising:
(a) a first control module (202), wherein the first control module (202) is in communication with at least one brake (220,222) and at least one sensor (212,214), and wherein the sensor (212,214) is in communication with at least one wheel (228,230), and wherein the first control module (202) controls the brake (220,222) in response to information received from the sensor (212,214); and
(b) a second control module (204), wherein the second control module (204) is in communication with at least one brake (224,226) and at least one sensor (216,218), and wherein the sensor (216,218) is in communication with at least one wheel (232, 234), wherein the second control module (204) controls the brake (224,226) in response to information received from the sensor (216,218), and wherein the second control module (204) is in communication with the first control module (202),
**characterised in that** the first control module (202) controls antilock braking on the front portion of the vehicle, and wherein the second control module (204) controls antilock braking on the rear portion of the vehicle.

2. The system of claim 1:
wherein the first control module (202) further includes an electronic control unit and at least one modulator valve;
wherein the second control module (204) further comprises an electronic control unit and at least one modulator valve; and
wherein the brake system is an antilock brake system.

3. The system of claim 1 or 2, further comprising a communications link (250) for communication between the control modules (202,204).

4. The system of claim 1 or 2, wherein the communications link (250) further comprises a J 1939 serial data bus.

5. The system of claim 1 or 2, further comprising a user interface (260) in communication with at least one of the first control module (202) and the second control module (204).

6. The system of claim 1 or 2, further comprising a power source (252) for providing electrical power to the control modules (202,204) and a source of compressed air.

7. The system of claim 1 or 2, wherein the brake system utilizes compressed air for applying and releasing the brakes.

8. The system of claim 1 or 2, wherein information received by the first control module (202) from the second control module (204) prevents the operation of the first control module (202) independent of the second control module (204).

9. The system of claim 1, wherein the first control module (202) further comprises an electronic control unit and at least one valve assembly.

10. The system of claim 1, wherein the second control module (204) further comprises an electronic control unit and at least one valve assembly.

11. The system of claim 1 or 2, wherein the second control module (204) provides self-diagnostic information to the first control module (202) during the operation of the system.

12. A method for configuring an antilock air brake system installed on a vehicle, the method comprising:
(a) integrating antilock air brake system electronic control functions and modulator valve functions into a first control module (202) for controlling the front brakes (220,222) of the vehicle in the antilock air brake system;
(b) integrating antilock air brake system electronic control functions and modulator valve functions into a second control module (204) for controlling the rear brakes (224,226) of the vehicle in the antilock air brake system; and
(c) providing a communications link (250) between the first (202) and second (204) modules.

13. The method of claim 12, further including:
(d) operatively connecting the first control module (202) to at least one brake (220,222) and at least one sensor (212,214), wherein the sensor (212,214) is in communication with at least one front wheel (228,230), and wherein the first control module (202) controls the brake (220,222) in response to information received from the sensor (212,214);
(e) operatively connecting the second control module (204) to at least one brake (224,226) and at least one sensor (216,218), wherein the sensor. (216,218) is in communication with at least one rear wheel (232, 234), and wherein the second control module (204) controls the brake (224,226) in response to information received from the sensor (216,218);
(f) connecting the second control module (204) to the first control module (202) using the communications link (250); and
(g) providing a source of electrical power (252) to the control modules (202,204).

14. The method of claim 13, wherein information received by the first control module (202) from the second control module (204) prevents the operation of the first control module (202) independent of the second control module (204).

15. The method of claim 13, further comprising the step of connecting the first control module (202) to a user interface (260) using the communications link (250).

16. The method of claim 14, wherein the user interface (260) is a dash mounted device.

17. The method of claim 14, wherein the user interface (260) provides system diagnostic information.

18. The method of claim 13, further comprising the step of providing compressed air to the brake system.

19. The method of claim 13, wherein the communications link (250) further comprises a J1939 serial data bus.

20. The method of claim 13, wherein the vehicle is a car, truck, van, bus, or tractor trailer combination vehicle.

## Patentansprüche

1. Zum Einsatz in einem Fahrzeug vorgesehenes Antiblockiersystem, umfassend:
(a) ein erstes Steuermodul (202), wobei das erste Steuermodul (202) mit mindestens einer Bremse (220, 222) und mindestens einem Sensor (212, 214) kommuniziert und wobei der Sensor (212, 214) mit mindestens einem Rad (228, 230) kommuniziert und wobei das erste Steuermodul (202) die Bremse (220, 222) in Reaktion auf Informationen steuert, die es vom Sensor (212, 214) erhalten hat, und
(b) ein zweites Steuermodul (204), wobei das zweite Steuermodul (204) mit mindestens einer Bremse (224, 226) und mindestens einem Sensor (216, 218) kommuniziert und wobei der Sensor (216, 218) mit mindestens einem Rad (232, 234) kommuniziert und wobei das zweite Steuermodul (204) die Bremse (224, 226) in Reaktion auf Informationen steuert, die es vom Sensor (216, 218) erhalten hat, und wobei das zweite Steuermodul (204) mit dem ersten Steuermodul (202) kommuniziert,
**dadurch gekennzeichnet, dass** das erste Steuermodul (202) das Antiblockierbremsen im vorderen Abschnitt des Fahrzeugs steuert, und wobei das zweite Steuermodul (204) das Antiblockierbremsen im hinteren Abschnitt des Fahrzeugs steuert.

2. System gemäß Anspruch 1:
wobei das erste Steuermodul (202) ferner ein elektronisches Steuergerät und mindestens ein Modulatorventil enthält;
wobei das zweite Steuermodul (204) ferner ein elektronisches Steuergerät und mindestens ein Modulatorventil umfasst; und
wobei das Bremssystem ein Antiblockiersystem ist.

3. System gemäß Anspruch 1 oder 2, ferner umfassend: eine Datenübertragungsverbindung (250) zur Kommunikation wischen den Steuermodulen (202, 204).

4. System gemäß Anspruch 1 oder 2, wobei die Datenübertragungsverbindung (250) ferner einen seriellen J1939-Datenbus umfasst.

5. System gemäß Anspruch 1 oder 2, ferner umfassend: eine Benutzerschnittstele (260), die mit mindestens einem der Steuermodule, dem ersten (202) oder dem zweien (204), kommuniziert.

6. System gemäß Anspruch 1 oder 2, ferner umfassend: eine Stromquelle (252) zur Bereitstellung elektrischen Stroms für die Steuermodule (202, 204) und eine Druckluftquelle.

7. System gemäß Anspruch 1 oder 2, wobei das Bremssystem die Druckluft zum Betätigen und Lösen der Bremsen einsetzt.

8. System gemäß Anspruch 1 oder 2, wobei Informationen, die das erste Steuermodul (202) vom zweien Steuermodul (204) erhält, einen vom zweien Steuermodul (204) unabhängigen Betrieb des ersten Steuermoduls (202) verhindern.

9. System gemäß Anspruch 1, wobei das erste Steuermodul (202) ferner ein elektronisches Steuergerät und mindestens eine Ventilbaugruppe enthält.

10. System gemäß Anspruch 1, wobei das zweite Steuermodul (204) ferner ein elektronisches Steuergerät und mindestens eine Ventilbaugruppe enthält.

11. System gemäß Anspruch 1 oder 2, wobei das zweite Steuermodul (204) dem ersten Steuermodul (202) während des Systembetriebs Eigendiagnoseinformationen bereitstellt.

12. Verfahren zur Konfigurierung eines an einem Fahrzeug installierten Antiblockiersystems für Druckluftbremsen, wobei das Verfahren umfasst:
(a) Integrieren von elektronischen Steuerfunktionen und Modulatorventilfunktionen eines Antiblockiersystems für Druckluftbremsen in ein erstes Steuermodul (202) im Antiblockiersystem für Druckluftbremsen zur Steuerung der vorderen Bremsen (220, 222) des Fahrzeugs;
(b) Integrieren von elektronischen Steuerfunktionen und Modulatorventilfunktionen eines Antiblockiersystems für Druckluftbremsen in ein zweites Steuermodul (204) im Antiblockiersystem für Druckluftbremsen zur Steuerung der hinteren Bremsen (224, 226) des Fahrzeugs; und
(c) Bereitstellen einer Datenübertragungsverbindung (250) wischen dem ersten (202) und dem zweien (204) Modul.

13. Verfahren gemäß Anspruch 12, ferner umfassend:
(d) Wirkverbinden des ersten Steuermoduls (202) mit der mindestens einen Bremse (220, 222) und dem mindestens einen Sensor (212, 214), wobei der Sensor (212, 214) mit dem mindestens einen Vorderrad (228, 230) kommuniziert und wobei das erste Steuermodul (202) die Bremse (220, 222) in Reaktion auf Informationen steuert, die es vom Sensor (212, 214) empfangen hat;
(e) Wirkverbinden des zweien Steuermoduls (204) mit der mindestens einen Bremse (224, 226) und dem mindestens einen Sensor (216, 218), wobei der Sensor (216, 218) mit dem mindestens einen Hinterrad (232, 234) kommuniziert und wobei das zweite Steuermodul (204) die Bremse (224, 226) in Reaktion auf Informationen steuert, die es vom Sensor (216, 218) empfangen hat;
(f) Verbinden des zweiten Steuermoduls (204) mit dem ersten Steuermodul (202) unter Verwerdung der Datenübertragungsverbindung (250); und
(g) Bereitstellen einer elektrischen Stromquelle (252) zu den Steuermodulen (202, 204).

14. Verfahren gemäß Anspruch 13, wobei Informationen, die das erste Steuermodul (202) vom zweien Steuermodul (204) empfängt, den vom zweien Steuermodul (204) unabhängigen Betrieb des ersten Steuermoduls (202) verhindern.

15. Verfahren gemäß Anspruch 13, ferner umfassend: den Schritt des Verbindens des ersten Steuermoduls (202) mit einer Benutzerschnittstelle (260) unter Verwerdung der Datenübertragungsverbindung (250).

16. Verfahren gemäß Anspruch 14, wobei die Benutzerschnittstelle (260) ein am Armaturenbrett montiertes Gerät ist.

17. Verfahren gemäß Anspruch 14, wobei die Benutzerschnittstelle (260) Systemdiagnoseinformationen bereitstellt.

18. Verfahren gemäß Anspruch 13, ferner umfassend: den Schritt des Bereitstellens von Druckluft für das Bremssystem.

19. Verfahren gemäß Anspruch 13, wobei die Datenübertragungsverbindung (250) ferner einen seriellen J1939-Datenbus umfasst.

20. Verfahren gemäß Anspruch 13, wobei das Fahrzeug ein Personenkraftwagen, Lastkraftwagen, Lieferwagen, Bus oder Lastzug ist.

## Revendications

1. Système de freinage à anti-blocage destiné à être utilisé sur un véhicule, le système comprenant :
(a) un premier module de commande (202), le premier module de commande (202) étant en communication avec au moins un frein (220, 222) et au moins un capteur (212, 214), et le capteur (212, 214) étant en communication avec au moins une roue (228, 230), et le premier module de commande (202) pilotant le frein (220, 222) en réaction à des informations reçues en provenance du capteur (212, 214) ; et
(b) un second module de commande (204), le second module de commande (204) étant en communication avec au moins un frein (224, 226) et au moins un capteur (216, 218), et le capteur (216, 218) étant en communication avec au moins une roue (232, 234), le second module de commande (204) pilotant le frein (224, 226) en réaction à des informations reçues en provenance du capteur (216, 218), et le second module de commande (204) étant en communication avec le premier module de commande (202),
**caractérisé en ce que** le premier module de commande (202) pilote le freinage à anti-blocage sur la partie Avant du véhicule, et que le second module de commande (204) pilote le freinage anti-blocage sur la partie Arrière du véhicule.

2. Système selon la revendication 1 :
le premier module de commande (202) englobant en outre une unité de commande électronique et au moins une soupape modulatrice ;
le second module de commande (204) englobant en outre une unité de commande électronique et au moins une soupape modulatrice ; et
le système de freinage étant un système de freinage à anti-blocage.

3. Système selon la revendication 1 ou 2, comprenant en outre une liaison de communication (250) pour assurer les communications entre les modules de commande (202, 204).

4. Système selon la revendication 1 ou 2, la liaison de communication (250) comprenant en outre un bus de données série J1939.

5. Système selon la revendication 1 ou 2, comprenant en outre une interface utilisateur (260) laquelle est en communications avec au moins l'un des modules de commande suivants, à savoir le premier module de commande (202) et le second module de commande (204).

6. Système selon la revendication 1 ou 2, comprenant en outre une source d'énergie (252) destinée à fournir de l'énergie électrique aux modules de commande (202, 204) et une source d'air comprimé.

7. Système selon la revendication 1 ou 2, le système de freinage utilisant de l'air comprimé pour serrer et desserrer les freins.

8. Système selon la revendication 1 ou 2, des informations reçues par le premier module de commande (202) en provenance du second module de commande (204) empêchant le fonctionnement du premier module de commande (202) indépendamment du second module de commande (204).

9. Système selon la revendication 1, le premier module de commande (202) comprenant en outre une unité de commande électronique et au moins un ensemble soupape.

10. Système selon la revendication 1, le second module de commande (204) comprenant en outre une unité de commande électronique et au moins un ensemble soupape.

11. Système selon la revendication 1 ou 2, le second module de commande (204) procurant des informations d'auto-diagnostic au premier module de commande (202) pendant le fonctionnement du système.

12. Procédé de configuration d'un système de freinage pneumatique à anti-blocage installé sur un véhicule, le procédé comprenant les opérations consistant à :
(a) intégrer à un premier module de commande (202) les fonctions de commande électronique du système de freinage pneumatique à anti-blocage ainsi que les fonctions de la soupape modulatrice afin de piloter les freins Avant (220, 222) du véhicule dans le système de freinage pneumatique à anti-blocage ;
(b) intégrer à un second module de commande (204) les fonctions de commande électronique du système de freinage pneumatique à anti-blocage ainsi que les fonctions de la soupape modulatrice afin de piloter les freins Arrière (224, 226) du véhicule dans le système de freinage pneumatique à anti-blocage ; et
(c) procurer une liaison de communication (250) entre le premier (202) et le second (204) modules.

13. Procédé selon la revendication 12, comprenant en outre les opérations consistant à :
(d) connecter fonctionnellement le premier module de commande (202) à au moins un frein (220, 222) et à au moins un capteur (212, 214), le capteur (212, 214) étant en communication avec au moins une roue Avant (228, 230) et le premier module de commande (202) pilotant le frein (220, 222) en réaction à des informations reçues en provenance du capteur (212, 214) ;
(e) connecter fonctionnellement le second module de commande (204) à au moins un frein (224, 226) et à au moins un capteur (216, 218), le capteur (216, 218) étant en communication avec au moins une roue Arrière (232, 234) et le second module de commande (204) pilotant le frein (224, 226) en réaction à des informations reçues en provenance du capteur (216, 218) ;
(f) connecter le second module de commande (204) au premier module de commande (202) au moyen de la liaison de communication (250) ; et
(g) fournir une source d'énergie électrique (252) aux modules de commande (202, 204).

14. Procédé selon la revendication 13, des informations reçues par le premier module de commande (202) en provenance du second module de commande (204) empêchant le fonctionnement du premier module de commande (202) indépendamment du second module de commande (204).

15. Procédé selon la revendication 13, comprenant en outre l'étape consistant à connecter le premier module de commande (202) à une interface utilisateur (260) au moyen de la liaison de communication (250).

16. Procédé selon la revendication 14, l'interface utilisateur (260) étant un dispositif monté sur le tableau de bord.

17. Procédé selon la revendication 14, l'interface utilisateur (260) fournissant des informations de diagnostic relatives au système.

18. Procédé selon la revendication 13, comprenant en outre l'étape consistant à fournir de l'air comprimé au système de freinage.

19. Procédé selon la revendication 13, la liaison de communication (250) comprenant en outre un bus de données série J1939.

20. Procédé selon la revendication 13, le véhicule étant une voiture, un poids lourd, une fourgonnette, un autocar ou un véhicule à combinaison tracteur-remorque.
